# EUROPÄISCHE PATENTSCHRIFT

(11) **EP 1 900 695 B1**
(45) Veröffentlichungstag und Bekanntmachung des Hinweises auf die Patenterteilung: **14.12.2011**
(21) Anmeldenummer: 06119062.5
(22) Anmeldetag: 17.08.2006
(51) Int. Cl.: C03B 33/037, B65G 49/06, G06Q 10/00

(54) **Verfahren und Vorrichtung zum Zuschneiden von Rohglasplatten**
Process and apparatus for cutting glass sheets
Procédé et dispositif pour couper des feuilles de verre

(43) Veröffentlichungstag der Anmeldung: 19.03.2008
(73) Patentinhaber: Albat + Wirsam Software AG, 35440 Linden (DE)
(72) Erfinder: Wirsam, Bernd, Dr., 35440 Linden (DE); Albat, Renate, Dr., 35440 Linden (DE)
(74) Vertreter: Betten & Resch

(56) Entgegenhaltungen:
- EP-A- 1 431 215
- EP-A2- 1 284 229
- EP-A2- 1 319 634
- WO-A-96/22948
- CH-A5- 626 596
- JP-A- 6 166 530
- JP-A- 2003 306 338
- US-A- 4 709 483
- US-A1- 2003 226 433

## Beschreibung

### Gebiet der Erfindung

Die Erfindung betrifft ein Verfahren und eine Vorrichtung zum Zuschneiden von Rohglasplatten in eine Vielzahl von Glaszuschnitten.

### Technologischer Hintergrund

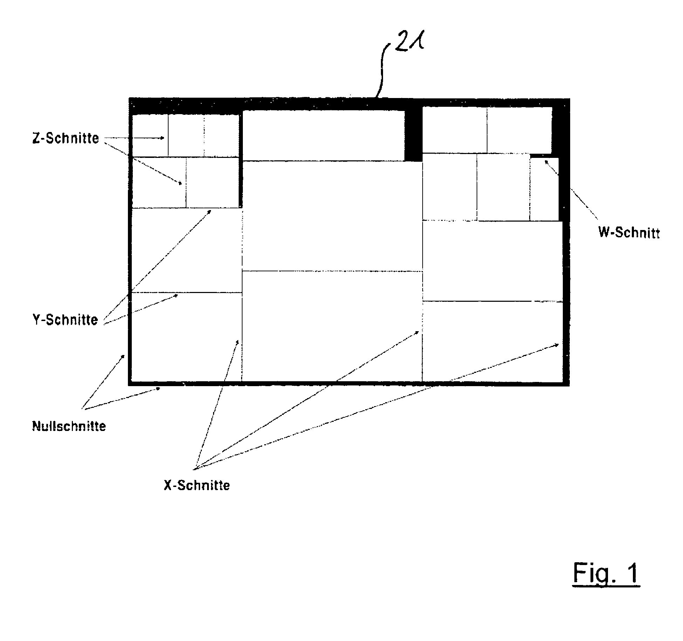

Seit etwa 1976 wird beim Zuschnitt von Fixmaßen häufiger Glassorten vorwiegend von sog. Jumbo-Abmessungen (z.B. 6000x3210 mm) ausgegangen. Die Rohware wird auf großen A-Böcken per LKW angeliefert und paketweise im Glasbetrieb mittels Portalkran auf A- oder L-Böcke abgestellt. Von dort wird die einzelne Rohglas-Lagerplatte entweder mit demselben Portalkran oder anderen mit Vakuumsaugern versehenen Entnahmeeinrichtungen aus dem Paket heraus gekippt und an die fast senkrecht stehenden Vakuumsauger des Kipptisches abgegeben. Die Sauger kippen anschließend in die Horizontale und befördert somit auch das Glas in die Waagerechte. Neuere Verfahren erlauben auch das Schneiden von Flachglas in der Senkrechten. In der bisherigen üblichen Vorgehensweise wird das Glas vom Kipptisch auf den eigentlichen Schneidetisch waagerecht weitertransportiert. Dort wird es auf einem Luftkissenpolster durch seitliche Anschläge grob und durch Sensoren in Längsrichtung fein positioniert und durch Absenkung auf dem Tisch arretiert. Die heute marktgängigen Schneidetische besitzen nur einen Schneidekopf, der auf einer Brücke bewegt und positioniert werden kann. Auch die Brücke ist verfahrbar, so dass jede Koordinate angesteuert werden kann. Der Schneidekopf kann auf beliebige Winkel eingestellt werden. Damit ist es möglich, sowohl rechtwinklige Scheiben zu schneiden, wie auch geradlinige Modelle und völlig freie Formen. Die Schneidepläne werden durch ein Zuschnittoptimierungsprogramm auf einem Computer (meist PC) berechnet und über ein Netzwerk an die Maschinensteuerung übergeben. In der Regel ist auch der Rechner der Maschinensteuerung in der Lage Optimierungen durchzuführen. Ein typischer Schneideplan einer Rohglasplatte 21 mit einer charakteristischen Aufteilung ist in Fig. 1 dargestellt.

Das Lagermaß erhält zunächst je einen Anschnitt in Quer- und Längsrichtung (Nullschnitte), die als Referenzgeraden dienen. Anschließend wird der Schneideplan auf kurzem Weg zerteilt. Der Plan selbst wird zunächst durch x-Schnitte traversal aufgeteilt. Die so entstandenen Querstreifen (Traveren) werden wiederum durch y-Schnitte aufgeteilt. Zwischen zwei y-Schnitten können sich dann noch z-Schnitte befinden. Sogenannte w-Schnitte können theoretisch vorkommen, führen in der Regel aber nicht zu einer weiteren Verbesserung der Verschnittquoten und werden deshalb häufig bei der Zuschnittoptimierung erst gar nicht generiert. Die hier dargestellte Aufteilung hat den Vorteil, dass ein automatisches Brechen relativ einfach durchgeführt werden kann.

Die geschnittene (besser: angeritzte) Glastafel wird komplett auf eine Folge von Brechtischen weiter transportiert. Der erste Brechtisch hat die Aufgabe die x-Schnitt aufzubrechen. Dazu wird die ganze Glastafel entweder über Rollen unter Spannung gesetzt, sodass der x-Schnitt im Durchlauf gebrochen wird, oder durch eine von unten gegen das Glas gedrückte Brechleiste. Dabei muss das Glas jedoch kurzfristig an der richtigen Stelle angehalten werden. Die richtige Stelle ergibt sich aus dem Vorschub der Glastafel. Der Abtransport der Scheiben erfolgt bei beiden Verfahren mit höherer Geschwindigkeit als der Hintransport, so dass ein Abstand zwischen den Traveren entsteht. Auf der letzten Lagerplatte eines Optimierungslaufes entsteht eine große Restplatte, die über einen weiteren Kipptisch oder manuell, z.T mit Hilfe des Portalkrans, ausgeschleust werden muss. Ein anderer Tisch lenkt den Glasfluss im rechten Winkel ab. Das Aufbrechen der y-Schnitte erfolgt wieder wie bei den x-Schnitten beschrieben automatisch oder aber auch manuell. Anschließend erfolgt eine weitere Umlenkung des Glasflusses um 90 Grad und zum Schluss wird der z-Schnitt gebrochen, wieder entweder automatisch oder manuell. Bei Einzelmodellen erfolgt das Brechen meist manuell.

Nach dem Brechen der z-Schnitte sind die Fixmaße fertig. Sie müssen danach wieder manuell oder automatisch in die Senkrechte gebracht werden und können dann entweder manuell auf fixe oder bewegliche A-Böcke oder in Fächerwagen sortiert werden, automatisch oder manuell. Fixe A-Böcke werden anschließend auf mobile A-Böcke in umgekehrter Produktionsreihenfolge abgestellt. Die Transportböcke oder Fächerwagen werden den weiteren Bearbeitungsgängen (z.B. Isolierglasfertigung, ESG-Produktion, Schleifen, Bohren usw.) zugeführt. An den Bearbeitungslinien erfolgt die Entladung der Scheiben manuell oder automatisch. Bei Fächerwagen kann sichergestellt werden, dass die Entnahmereihenfolge einer optimalen Produktionsreihenfolge des Folgeprozesses entspricht.

In der EP 1 319 634 A1 ist ein Verfahren und eine Vorrichtung zum Teilen von Glasplatten in Zuschnitte beschrieben, wobei die angeschnittenen Traveren in einem Zwischenpuffer abgelegt und bei Bedarf einem Folgeprozess zugeleitet werden. Der Aufbau des Zwischenpuffers hat den Nachteil, dass
- z.B. ein Volumen von durchschnittlich 400 qm Einzelglas komplett zugeschnitten werden muss,
- daher viel Platz für die Lagerung verbraucht wird,
- das Glas lange auf die Weiterbearbeitung warten muss (z.B. einen halben Tag),
- ein Glasbruch oder ein Schnellschuss im Folgeprozess nur stark zeitverzögert und außerhalb der übliche Logistik geschnitten werden kann.

Die einzigen Verfahren, bei denen derzeit Glas in der Praxis senkrecht aufgeteilt wird, erfolgen beim Aufteilen von Verbundsicherheitsglas, insbesondere bei Panzerglas. Verbundsicherheitsglas mit zwei Scheiben kann durch gleichzeitiges Anritzen der oberen und unteren Glasscheiben realisiert werden. Das Brechen der Scheiben trennt diese jedoch nicht, da zwischen den beiden Scheiben noch eine Folie eingeklebt ist. Durch Erhitzen und Auseinanderziehen der Scheiben und Durchtrennen der Folie mit einer Klinge wird das Glas endgültig zertrennt. Bei mehr als zwei Scheiben versagt dieses Verfahren, da die innenliegende Scheibe nicht geritzt werden kann. Dann muss gesägt oder durch Waterjet getrennt werden. Dies erfolgt in der Regel in der (fast) Senkrechten mit einer wasserumspülten Diamanttrennscheibe. Zweischeibige Verbundsicherheitsgläser werden inzwischen bei Schneidanlagen ebenfalls senkrecht getrennt. Beim Bearbeiten in der Senkrechten kommt erschwerend hinzu, dass die Glastafeln gedreht werden müssen. Die Patentanmeldung EP 0 905 062 A1 beschreibt das Verfahren des Schneidens, Brechens, Trennen der Folie und Drehen der Scheibe.

Weitere Patente und -anmeldungen (US 4 871 104, DE 42 34 536 A1, EP 0 805 784 B1) beschäftigen sich mit dem Zuschneiden in der Vertikalen. Sie beschreiben isoliert das Schneiden und Brechen, jedoch nicht die durchgängige Logistik des Ablaufes der Glasproduktion. Die dort beschriebenen Verfahren wurden am Markt jedoch nicht umgesetzt.

Ein weiteres Verfahren zum Auftrennen von Panzerglas in der Horizontalen und auch der Vertikalen, aber auch von besonders dicken Glas arbeitet mit dem Waterjet, bei dem ein mit feinstem Glasstaub versetzter Wasserstrahl unter extremen Druck und hoher Geschwindigkeit das Glas zertrennt.

Die US 2005/0182506 A1 beschreibt eine Glasschneidelinie, bei der eine kontinuierliche Optimierung der Glaszuschnitte erfolgt.

Die heutige Situation in der Isolierglasfertigung ist dadurch gekennzeichnet, dass Standardisolierglas nicht mehr wie früher aus zwei gleichen Scheiben aus 4 mm Floatglas besteht, sondern in über 90 % der Fälle einen asymmetrischen Aufbau besitzt. Führten früher computergestützte Optimierungen von 4mm Floatglas zu Verschnittquoten von 5 % und damit zu Einsparungen von 10 % im Vergleich zur manuellen Aufteilung des Glases, so erreicht man heute selbst bei Einsatz von herkömmlicher Software wieder nur ca. 15 % Verschnitt. Dies liegt daran, dass durch den asymmetrischen Aufbau der Scheiben jede Glassorte für sich optimiert und zwischengespeichert werden muss. Da der zur Verfügung stehende Platz beschränkt ist, außerdem die Reaktionsfähigkeit auf Marktanforderungen es erforderlich macht, dass immer wieder neue Aufträge in den Produktionsprozess eingeschleust werden müssen, ist die Folge, dass es bisher üblich war, viele (bei typischer Betriebsgröße 7 bis 8) einzelne Produktionsjobs pro Tag zu optimieren, zuzuschneiden und zu produzieren. Das jeweils geringe optimierbare Volumen erklärt die schlechte Materialausbeute, den starken Anfall von Resten am Ende eines jeden Jobs und für jede Glassorte, den hohen Handlingsbedarf für das Wegstellen der Reste, die Verkratzungsgefahren durch dieses Handling.

### Zusammenfassung der Erfindung

Der vorliegenden Erfindung liegt somit die Aufgabe zugrunde, ein Verfahren und eine Vorrichtung zum Zuschneiden von Rohglasplatten in eine Vielzahl von Glaszuschnitten vorzuschlagen, welches eine geringe Verschnittquote auch bei der Bearbeitung von mehreren verschiedenen Glassorten ermöglicht.

Gelöst wird die Aufgabe durch ein Verfahren zum Zuschneiden von Rohglasplatten in eine Vielzahl von Glaszuschnitten umfassend die Schritte der Erfassung des Vorrats an ungeschnittenen und teilgeschnittenen Rohglasplatten, der kontinuierlichen Erfassung des Eingangs neuer Zuschnittaufträge und der Bearbeitung von Zuschnittaufträgen, die kontinuierliche Bestimmung einer optimierten Bearbeitungsreihenfolge und optimierter Rohglasplatten-Zuschnittmuster basierend auf den erfassten Werten, die Bearbeitung der Zuschnittaufträge entsprechend der bestimmten optimierten Bearbeitungsreihenfolge und optimierten Zuschnittmuster, und die Einlagerung der Glaszuschnitte in zugeordnete Fächer eines Zwischenspeichers.

Das erfindungsgemäße Endlos-Verfahren kann die Verschnittquoten drastisch senken, den Platzbedarf für das Sortieren von Glas erheblich verkleinern, Durchlaufzeiten stark reduzieren, auf Störungen, z.B. Bruch und Eilaufträge flexibel reagieren, und das Restehandling stark vereinfachen.

Die Aufgabe wird ferner gelöst durch eine Vorrichtung zum Zuschneiden von Rohglasplatten in eine Vielzahl von Glaszuschnitten, aufweisend ein Rohglasplattenlager zur Lagerung ungeschnittener und teilgeschnittener Rohglasplatten, eine Erfassungseinrichtung zur Erfassung des Vorrats an ungeschnittenen und teilgeschnittenen Rohglasplatten und zur kontinuierlichen Erfassung des Eingangs neuer Zuschnittaufträge und von zur Bearbeitung freigegebenen Zuschnittaufträgen, eine Berechnungseinrichtung zur kontinuierliche Bestimmung einer optimierten Bearbeitungsreihenfolge und optimierter Rohglasplatten-Zuschnittmuster durch eine Realtime-Optimierung aller durch die Erfassungseinrichtung erfassten aktuellen Zuschnittaufträge, umfassend die erfassten neuen Zuschnittaufträge und die erfassten zur Bearbeitung freigegebenen Zuschnittaufträge, auf den durch die Erfassungseinrichtung erfassten Vorrat an ungeschnittenen und teilgeschnittenen Rohglasplatten eine Bearbeitungseinrichtung zum Zuschneiden der Rohglasplatten in die Glaszuschnitte, eine Steuereinrichtung zur Steuerung der Bearbeitungseinrichtung entsprechend der bestimmten optimierten Bearbeitungsreihenfolge und optimierten Zuschnittmuster, und ein Zwischenlager mit mehreren Fächern zur durch eine Berechnungseinrichtung in Abhängigkeit der optimierten Bearbeitungsreihenfolge gesteuerten dynamischen Einlagerung und Pufferung der bearbeiteten Glaszuschnitte, wobei die Fächer des Zwischenspeichers ausgebildet sind, gleichzeitig mit Glaszuschnitten befüllt und entleert zu werden.

Die optimierte Bearbeitungsreihenfolge kann dabei basierend auf einer für eine sich anschließende Weiterverarbeitung oder den Versand der Glaszuschnitte benötigten Weiterverarbeitungsreihenfolge bestimmt werden.

Das jeweilige Fach des Zwischenspeichers kann so ausgewählt werden, dass die bei Ein- und Auslagerung in den Zwischenspeicher erforderlichen Verfahrwege minimiert sind.

Vorzugsweise werden bei der kontinuierlichen Bestimmung der optimierten Bearbeitungsreihenfolge und optimierten Rohglasplatten-Zuschnittmuster mehrere unterschiedliche Glassorten berücksichtigt, die in frei wählbarer Abfolge bearbeitbar sind.

Vorzugsweise können sowohl manuell ein- oder ausgeschleuster Einzelglasscheiben als auch besonderer Eilaufträge bei der Optimierung und Bearbeitungssteuerung berücksichtigt werden.

Gemäß einem bevorzugten Ausführungsbeispiel wird die Beschädigung einer Rohglasplatte oder eines Glaszuschnitts während der Bearbeitung erfaßt und bei der kontinuierlichen Bestimmung der optimierten Bearbeitungsreihenfolge und optimierten Rohglasplatten-Zuschnittmuster berücksichtigt.

Bei einer Unterbrechung der Verarbeitung werden vorzugsweise die momentanen Erfassungs- und Bestimmungsresultate des Verfahrens automatisch abgespeichert.

Die Bestimmung der optimierten Bearbeitungsreihenfolge und optimierter Rohglasplatten-Zuschnittmuster kann zugunsten einer höheren Produktivität in Form von pro Zeiteinheit bearbeiteten Glaszuschnitten oder zugunsten eines minimierten Materialverschnitts eingestellt werden.

Gemäß einem Ausführungsbeispiel können die Fächer des Zwischenspeichers gleichzeitig mit Glaszuschnitten befüllt und entleert werden.

Vorzugsweise wird der aktuelle Bearbeitungszustand des Verfahrens einschließlich etwaiger Beschädigungen von Rohglasplatten oder Glaszuschnitten auf einer Anzeigeeinrichtung angezeigt, um die Bedienmannschaft ständig über den aktuellen Bearbeitungsstand zu informieren.

### Kurze Beschreibung der Zeichnungen

Die Erfindung wird im folgenden anhand von Ausführungsbeispielen unter Bezugnahme auf die Zeichnungen im Detail beschrieben.
- Fig. 1: zeigt beispielhaft ein Zuschnittmuster einer Rohglasscheibe.
- Fig. 2: zeigt schematisch die wesentlichen Komponenten eines Ausführungsbeispiels der erfindungsgemäßen Glaszuschneidevorrichtung.
- Fig. 3: ist ein Flußdiagramm, das die Verfahrensschritte eines Ausführungsbeispiels des erfindungsgemäßen Glaszuschneideverfahrens zeigt.
- Fig.4: ist ein Flußdiagramm, das ein Ausführungsbeispiel des Verfahrensschrittes S10 aus Fig. 3 näher erläutert.
- Fig. 5: zeigt schematisch ein Ausführungsbeispiel eines Zwischenspeichers der erfindungsgemäßen Glaszuschneidevorrichtung.

### Detaillierte Beschreibung der Erfindung

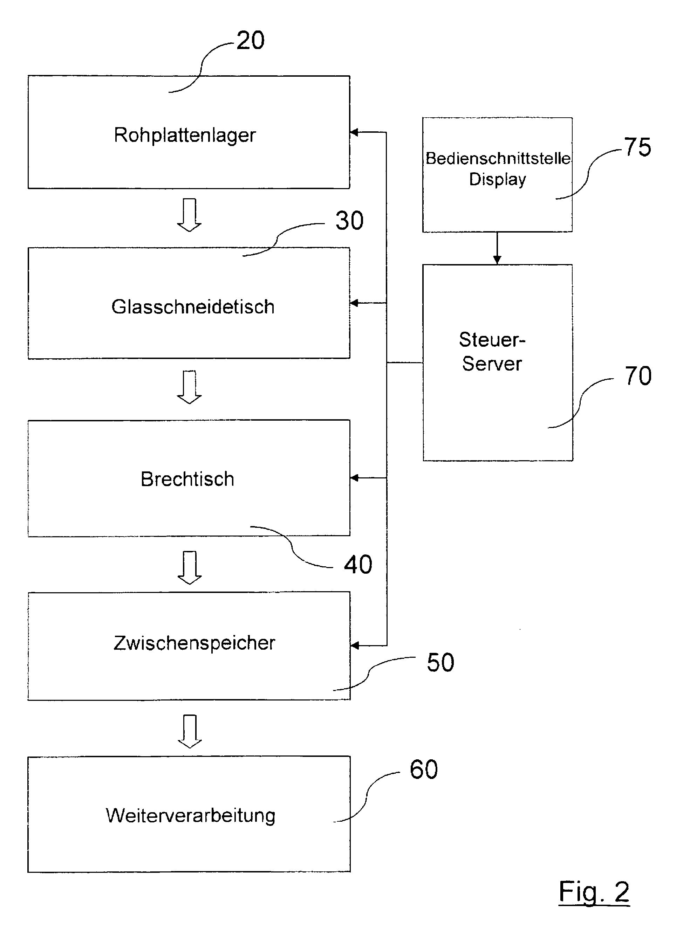

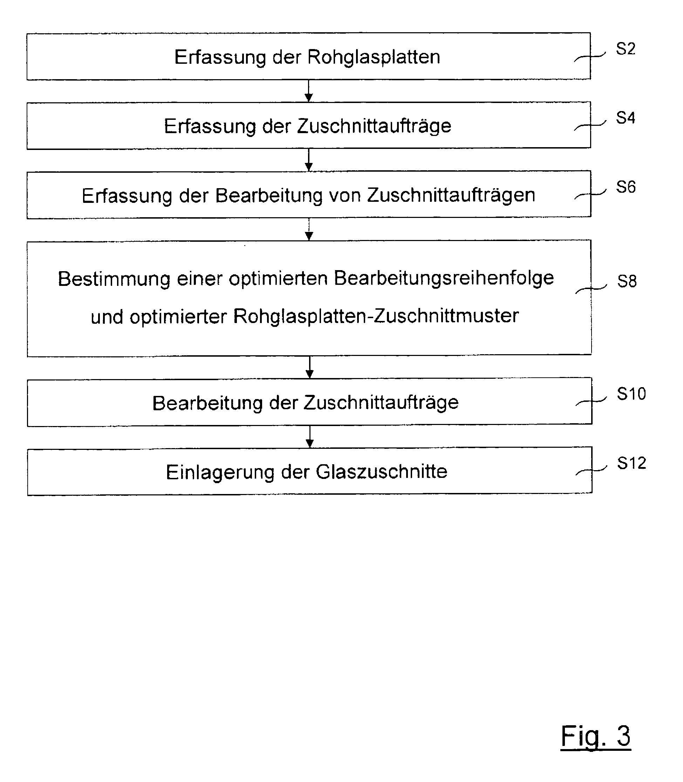

Fig. 2 zeigt schematisch die wesentlichen Komponenten eines Ausführungsbeispiels der erfindungsgemäßen Glaszuschneidevorrichtung und Fig. 3 die Verfahrensschritte des zugehörigen erfindungsgemäßen Verfahrens.

In einem ersten Verfahrensschritt S2 werden vom Steuerserver 70 die im Rohplattenlager 20 befindlichen ungeschnittenen und teilgeschnittenen Rohglasplatten 21 erfasst, um zu Beginn der Verarbeitung den Rohglas-Lagerbestand zu bestimmen. In den Verfahrensschritten S4 und S6, die beide kontinuierlich und fortlaufend ausgeführt werden, erfasst der Steuerserver 70 einerseits neu hereinkommende Zuschnittaufträge sowie andererseits zur Bearbeitung freigegebene Zuschnittaufträge. Basierend auf der so jeweils aktuellen Datenlage führt der Steuerserver 70 in Verfahrensschritt S8 eine kontinuierliche Optimierungsberechnung der Zuschnittmuster sowie der Verarbeitungsreihenfolge des gesamten jeweils aktuellen Auftragsbestandes durch, der in der Regel unterschiedliche Glassorten und -stärken umfasst. Eine für die Weiterverarbeitung in einer nachfolgenden Bearbeitungslinie oder für den Versand erforderliche oder wünschenswerte Bearbeitungsreihenfolge (beispielsweise der zeitnahe Zuschnitt der beiden zugehörigen Glasscheiben unterschiedlicher Stärke einer Isolierglasscheibe) kann dem Steuerserver als Randbedingung eingegeben werden, ebenso besonders eilige Aufträge oder manuell eingeschleuste Einzelaufträge.

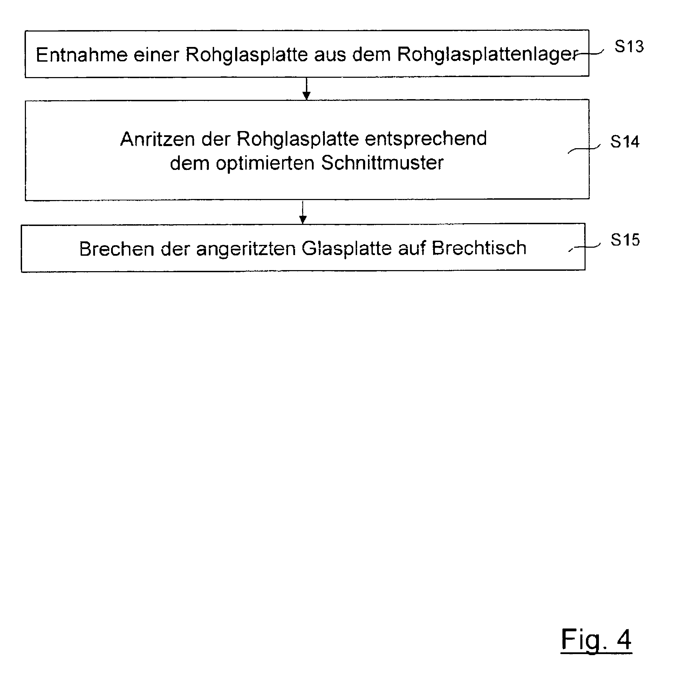

Die von dem Steuerserver 70 freigegebenen Zuschnittaufträge werden dann im Verfahrensschritt S10 ausgeführt und der fertige Glaszuschnitt dann in dem vorgesehenen Fach des Zwischenspeichers 50 zwischengelagert (Verfahrensschritt S12). Von einem Rohplattenlager 20, in dem ungeschnittene und teilgeschnittene Rohglasplatten gelagert werden, gelangt die Rohglasplatte dabei in einem Verfahrensschritt S13 (Fig. 4) unter Steuerung durch den Steuer-Server 70 mittels eines (nicht dargestellten) Portalkrans oder dergleichen zum Glasschneidetisch 30, auf dem die Rohglasplatte entsprechend dem durch die Optmierungsrechnung ermittelten Schnittmuster angeritzt wird (Schritt S14). Auf einem an sich bekannten Brechtisch 40 wird die geritzte Platte in Verfahrensschritt S15 dann gebrochen, um den gewünschten Glaszuschnitt zu erhalten, der dann in einem vorgesehenen Fach des Zwischenspeichers 50 aus Platzgründen vorzugsweise in vertikaler Position abgelegt wird. Der Glaszuschnitt steht dann für die Weiterverarbeitung in einer Verarbeitungslinie 60 oder auch zum Versand zur Verfügung.

Ein wesentlicher Aspekt des erfindungsgemäßen Verfahrens besteht darin, dass unter der Kontrolle des Steuerservers 70 der Zuschnitt dieses Auftragsbestandes nicht bis zum Ende erfolgt. Bevor der physikalische Zuschnitt die oben erwähnten Problemzonen gegen Ende der Optimierung erreicht, ist eine gewisse Zeit vergangen und neue Aufträge sind zu Produktionslosen zusammengefasst und freigegeben worden. Der Facharbeiter, z.B. der Zuschneider kann nun die neuen Produktionslose - je nach Dringlichkeit - entweder schnellstmöglich in den Zuschneideprozess einfügen oder an den bestehenden Prozess dranhängen. In beiden Fällen ergibt sich eine neue Aufgabe für die Zuschnittoptimierung, die auch den Nachschnitt von zerbrochenen Glasscheiben mit umfassen kann. Der Steuerserver 70 erkennt diese Situation und veranlasst je nach Bedarf eine entsprechende Neuoptimierung der Scheiben, die noch nicht zum Zuschnitttisch 30 gesendet wurden. Während des Zuschneideprozesses findet also eine Realtime-Optimierung statt, die permanent die neue Aufgabenstellung löst. Die Problemzonen werden vor sich her geschoben. Die Optimierung schöpft so zu sagen stets aus dem Vollen und kommt nie zum Ende. Dies gilt auch für das Tagesende, da der Prozess pausieren kann und am nächsten Morgen wieder dort gestartet werden kann, wo er am Abend zuvor gestoppt wurde. Die Tatsache, dass die Optimierung stets genügend viele Gläser zur Ermittlung von optimalen Zuschnittplänen zur Verfügung hat, bewirkt, dass die Ausbeute deutlich besser als bei begrenzten Optimierungen ist. Bei im Volumen (zeitlich) begrenzten Optimierungen fällt die Ausbeute in der Regel zu den letzten Zuschnittmustern hin ab. Dieser Effekt wird durch die Kombination Steuerserver und Optimierung und den dadurch möglichen Endloseffekt kompensiert.

Dies geschieht dadurch, dass ein zentraler Prozess alle beteiligten Komponenten in Echtzeit überwacht, steuert und koordiniert. Diese Komponenten sind: Die Anzeigesysteme 75, die Steuerung der Schneideanlage 30, 40, die Steuerung eines dynamischen Puffers (Zwischenspeicher 50) und die permanente Anpassung der Optimierung an die aktuelle Situation. Die Optimierung erhält dabei gleichzeitig Sicht auf alle Glassorten und kann diese gleichzeitig und gekoppelt optimieren. Durch diese zeitnahe und bedarfsgerechte Zurverfügungstellung der benötigten Glasmengen wird eine Synchronisierung des Zuschnittes erreicht. Die Optimierung schaut so zu sagen stets in mehrere Flüsse von zur Verfügung zu stellenden Glasscheiben unterschiedlicher Glassorten.

Das Zusammenspiel von Steuerserver und Optimierung ist jeweils so abgestimmt, dass der im Ablauf nach Zuschnitt und Brechen gelagerte Zwischenspeicher 50 stets optimal unter den Gegebenheiten der Folgeprozesse genutzt werden kann. Dadurch entsteht Dynamik in zwei Hierarchieebenen: In der direkten Steuerebene zum Zwischenspeicher (Sequenzer) werden die Stellplätze (Fächer) im Sequenzer so ermittelt, dass je nach Maschinentechnik ein quasi zeitgleiches Ein- und Auslagern möglich ist, wodurch eine sehr kurzfristige Steuerung durchführbar wird. In der logisch darüber liegenden Ebene werden ständig die bereitzustellenden (zu optimierenden) Gläser (Aufträge, Eilaufträge, Nachschnitte) beobachtet und gegebenenfalls der gesamte noch nicht fixierte (zur Schneidelinie gesandte) Bedarf neu optimiert. Darüber hinaus ist die Optimierung so angelegt, dass sie je nach Kostengesichtspunkten auch einfachere, in der Ausbeute etwas schlechtere Muster zugunsten einer höheren Produktivität im Zuschnitt bevorzugen kann. Insgesamt ergibt sich damit ein Verfahren, in dem ähnlich zu einem in der Natur häufig vorkommenden Fließgleichgewicht verschiedene Aspekte gleichzeitig und abgestimmt in Balance gehalten werden.

Der aus diesem Optimierungsverfahren sich ergebende Ablauf hat dann folgende Produktionsschritte beim Glaszuschneiden zur Folge: Aus dem Rohplattenlager 20 wird eine einfache vertikale oder horizontale Glasschneidemaschine 30 beschickt. Es wird eine ganze Platte aufgeteilt oder auch nur eine einzelne Travere ("Traverenspender", Travere bedeutet hier: Komplett durch Querschnitt abgetrennte Subplatte). Damit kann bedarfsgerecht eine kleine Menge von benötigten Glasscheiben einer Glassorte zur Verfügung gestellt werden und genau so schnell eine kleine Menge von benötigten Glasscheiben einer zweiten Glassorte, die zum Teil zur Vervollständigung z.B. einer Isolierglaseinheit benötigt werden. Bei dem heute üblichen asymmetrischen Aufbau von Isolierglasscheiben müssen also zwei Lagerplatten oder mindestens 2 Traveren vollständig aufgetrennt werden, um Scheibe und Gegenscheibe zusammenzubringen. D.h. falls mit diesem Vorgehen bereits eine Komplettierung erreicht werden kann, ist ein Mindestpuffer von ca. 40 qm Glas (bei traverenweiser Abarbeitung ca. 10 qm Glas) nötig. Falls - wie im Regelfall - die Komplettierung nicht sofort erreicht werden kann, sogar noch mehr. Dieser Fall des tafelweisen oder auch traverenweisen Zerschneidens wird durch eine synchronisierte Zuschnittoptimierung umgesetzt.

Die tatsächliche Pufferung erfolgt durch einen relativ kleinen dynamischen Sequenzer 50, in den die Scheiben eingereiht werden.

Dieser Sequenzer 50 dient unter anderem dazu, Scheiben, die noch nicht unmittelbar benötigt werden (außer Sequenz zu der in den Folgeprozessen verlangten Reihenfolge), kurzfristig zwischenzuparken. Außerdem werden Scheiben, die nicht unmittelbar in den automatisierten Folgeprozess einmünden hier ausgeschleust. Des Weiteren können hier Sonderscheiben (z.B. ESG-, VSG- oder Ornamentglasscheiben) in den Folge-Prozess eingeschleust werden. Wesentlich dabei ist, dass dies alles unter Echtzeitbedingungen vom Steuerserver 70 überwacht und gesteuert wird. Der Steuerserver ist jederzeit über den Inhalt des Sequenzers im Bilde und ermittelt direkt und unmittelbar die in der jeweiligen Situation notwendigen Maßnahmen wie etwa Festlegung des nächsten Eingangs- oder Ausgangsfach, direkte Reaktion auf Meldungen der Steuerung wie zum Beispiel Bruch oder Störungsmeldungen, gegebenenfalls Planung der Belegung unter der Randbedingung eines optimalen Durchsatzes.

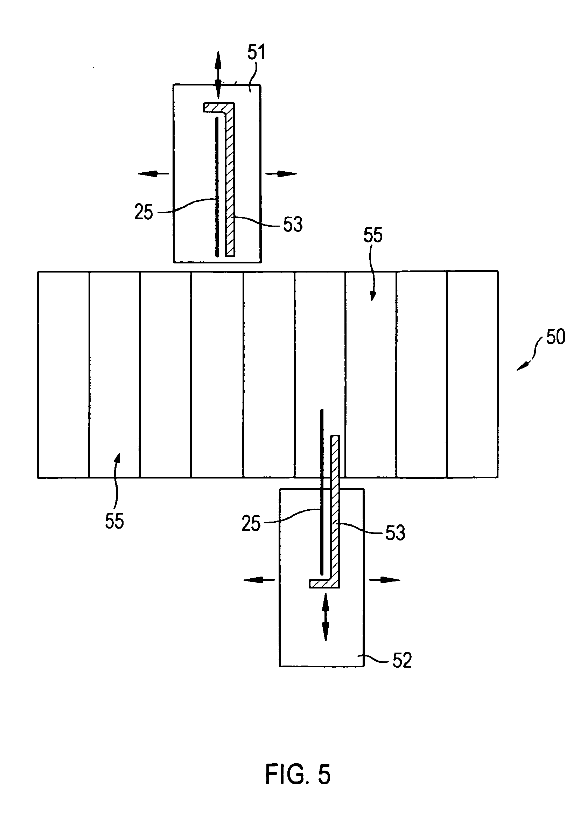

Der Zwischenspeicher oder Sequenzer 50 kann beispielsweise dadurch realisiert werden, dass zwei gegeneinander verschiebbare Magazine dynamisch mit Scheiben gefüllt und gleichzeitig dynamisch wieder entleert werden. Eine alternative Realisierung des Sequenzers 50 ist in Fig. 5 schematisch dargestellt und besteht aus einem immobilen Magazin 50, das von der einen Seite mit einem verfahrbaren Beschickungssystem 51 mit Handhabungsmitteln 53 für die Glaszuschnitte 25 befüllt und auf der gleichen oder der anderen Seite mit einer entsprechenden Entnahmeeinrichtung 52 mit Handhabungsmitteln 53 dynamisch in einer davon unabhängigen anderen Reihenfolge entleert werden kann.

Die Aufgabe der Glaszuschnittoptimierung bzw. des Systems aus Steuerserver und Optimierung besteht nicht nur darin, möglichst gute Verschnittquoten zu liefern, sondern auch darin, solche Reihenfolgen beim Zuschnitt zu erzeugen, die mit Hilfe der Dynamik des Sequenzers eine optimale Versorgung der Folgeprozesse gestattet. Bei einem Isolierglashersteller bedeutet dies z.B., dass eine Floatglasscheibe mit 4 mm Stärke nicht allzu lange im Zwischenpuffer 50 auf ihr beschichtetes Gegenstück zu warten braucht. Kommt die Gegenscheibe und ist damit z.B. auch die Versandreihenfolge gewährleistet, so können beide Scheiben 25 dann automatisch in die Isolierglaslinie oder einen weiteren Zwischenpuffer (Fächerwagen) eingeschleust werden. Durch den Steuerserver ist es weiterhin möglich, kurzfristig benötigte Scheiben in günstigeren Positionen des Sequenzers zwischenzuspeichern. Je nach Ausführung des Sequenzers können ja bestimmte Fächer schneller erreichbar sein als andere (Verfahrwege etc.). Dies ist, wie bereits weiter oben gesagt, dadurch möglich, dass der Steuerserver die benötigen Speicherpositionen quasi im Moment des Speicherns aufgrund der aktuellen Situation erst berechnet und verwaltet. Abhängig vom Folgeprozess ist es dadurch auch möglich, bei entsprechend vergrößertem Sequenzer, Ausgangsscheiben zu verzögern und dadurch einen echten zeitlichen Puffer für Folgeprozesse bei einem eventuellen Ausfall der Versorgung durch den Zuschnitt zu erlangen. Ebenso kann der Steuerserver den Sequenzer so steuern, dass bei Ausfall oder Stockungen im Folgeprozess mehr Scheiben als nötig gespeichert werden um einen Stopp der Schneideanlage in diesem Fall zu vermeiden. Dadurch wird eine direkte Ankopplung des Zuschnitts an Folgeprozesse mit variablem, einstellbarem Zeitpuffer möglich.

Bei dem üblichen Mix von täglich 5 bis 6 gängigen, zur Optimierung geeigneten Glassorten und einer Unzahl von Sonderkombinationen kann eine Zuschnittoptimierung diese Aufgabe nur dann erfüllen, wenn sie in der Lage ist, die Optimierungen der einzelnen Glassorten in ihrem zeitlichen Zusammenwirken zu synchronisieren. Für den manuellen Handzuschnitt von Sondergläsern liefert die

Optimierung synchronisierte Handzuschnittlisten. Darüber hinaus wird auch die Bereitstellung von Zukaufgläsern organisiert. Des Weiteren kann es notwendig sein, bei entsprechender Menge durch entsprechend angekoppelte, weitere Steuerserver-abhängige Zuschnittprozesse zu organisieren. So kann es sein, dass eine erhebliche Menge an laminierten Gläsern (Verbundsicherheitsglas, VSG) benötigt wird, die über einen technisch komplett andersartigen Zuschnittprozess bereitgestellt werden müssen. Ein abhängiger Steuerserver (Tochterprozess) ist bei entsprechendem Aufbau in der Lage, durch entsprechenden direkten Zugriff auf die VSG-Schneideanlage und die dortigen Anzeigen diesen Prozess ebenfalls entsprechend dem Bedarf zu synchronisieren. Tatsächlich können die auf diese Art kurzfristig bereitgestellten VSG-Scheiben und die anderen Sonderscheiben dann auf vom Steuerserver überwachte, unterschiedliche Weise in den Prozess eingesteuert werden:
- Einschleusen am Eingang des Sequenzers: Hier wird zum Beispiel die Anzeige am Brechtisch genutzt, um den Arbeiter anzuweisen, statt der nächsten, zugeschnittenen Scheibe eine Scheibe von einem bereitstehenden, vororganisierten Vorrat an Sonderscheiben aufzulegen.
- Einschleusen durch den Sequenzer: Es ist denkbar, dass ein entsprechender Fächerwagen mit Sondergläsern an eine Vorrichtung zur automatischen Entnahme angedockt wird, damit über den Steuerserver gesteuert die Lade- oder die Entladeinrichtung des Sequenzers diese Scheiben automatisch einschleusen oder am Ausgang direkt bereitstellen kann.
- Freilassen von Fächern in einem Ausgangsfächerwagen zur späteren manuellen Komplettierung.

Das Realtimesystem weist weiterhin eine geeignete Schnittstelle 75 zu den Bedienern auf. Dazu ist zum einen eine direkt mit dem Steuerserver kommunizierende Brechbild- und Informationsanzeige für die Werker am Brechtisch möglich, an der zum Beispiel Informationen zum Ausschleusen von Scheiben, die nicht durch den Zwischenpuffer gefahren werden sollen sowie Informationen zum Einschleusen von Scheiben aus anderen Quellen angezeigt werden. Zum Anderen wird eine Anzeige 75 verwendet, um den aktuellen Zustand der Optimierungen und der Ausgangsseite des dynamischen Zwischenpuffers 50 anzuzeigen. Auf dieser Anzeige 75 ist für den Anwender beispielsweise frühzeitig erkennbar, dass für eine Glassorte eine Restplatte entstehen wird, falls keine weiteren Aufträge zur Verfügung gestellt werden. Diese Information kann ein Mitarbeiter im darübergelagerten Planungssystem dazu nutzen, nach entsprechenden Aufträgen zu suchen und diese für das System bereitzustellen. Durch diese Wechselwirkung ist es möglich, die Dynamik des Systems selbst in der Arbeitsvorbereitung zu nutzen.

Zusammenfassend kann festgehalten werden, dass das erfindungsgemäße Verfahren zu deutlich verbesserten Verschnittquoten führt, aufwendige und kostspielige Sortieranlagen überflüssig macht, den Raumbedarf im Schneide- und Brechbereich erheblich verkleinert, die Durchlaufzeiten sehr verkürzt, die Versorgungssicherheit der Nachfolgeprozesse gewährleistet, ja eine direkte Kopplung erst möglich macht, flexibel auf kurzfristige Störungen, Brüche und Schnellschüsse reagiert, das Restehandling stark vereinfacht und die Verschnittoptimierung durch eine weiterreichende Kostenoptimierung des Gesamtprozesses ersetzt, bei der auch die unterschiedlichen Einstandskosten der Glassorten berücksichtigt sowie eine Abwägung zwischen produktivitäts- und Ausbeutegesichtspunkten vorgenommen werden.

## Patentansprüche

1. Verfahren zum Zuschneiden von Rohglasplatten (21) in eine Vielzahl von Glaszuschnitten (25), aufweisend die Schritte:
(a) Erfassung des Vorrats an ungeschnittenen und teilgeschnittenen Rohglasplatten (21),
(b) kontinuierliche Erfassung des Eingangs neuer Zuschnittaufträge,
(c) kontinuierliche Erfassung von zur Bearbeitung freigegebenen Zuschnittaufträgen,
(d) kontinuierliche Bestimmung einer optimierten Bearbeitungsreihenfolge und optimierter Rohglasplatten-Zuschnittmuster durch eine Realtime-Optimierung aller aktuellen Zuschnittaufträge umfassend die in Schritt (b) erfassten neuen Zuschnittaufträge die in Schritt (c) erfassten zur Bearbeitung freigegebenen Zuschnittaufträge auf den in Schritt (a) erfassten Vorrat an ungeschnittenen und teilgeschnittenen Rohglasplatten (21),
(e) Bearbeitung der Zuschnittaufträge entsprechend der bestimmten optimierten Bearbeitungsreihenfolge und optimierten Zuschnittmuster,
(f) durch eine Berechnungseinrichtung (70) in Abhängigkeit der in Schritt (d) ermittelten optimierten Bearbeitungsreihenfolge gesteuerte Einlagerung und Pufferung der Glaszuschnitte (25) in dynamisch zugeordneten Fächern (55) eines Zwischenspeichers (50), und
(g) sequenzierte Auslagerung der Glaszuschnitte (25) aus dem Zwischenspeicher (50), wobei die Fächer (55) des Zwischenspeichers (50) gleichzeitig mit Glaszuschnitten (25) befüllt und entleert werden.

2. Verfahren nach Anspruch 1, wobei die optimierte Bearbeitungsreihenfolge basierend auf einer für eine sich anschließende Weiterverarbeitung der Glaszuschnitte (25) benötigten Weiterverarbeitungsreihenfolge bestimmt wird.

3. Verfahren nach Anspruch 1 oder 2, wobei das jeweilige Fach des Zwischenspeichers (50) so ausgewählt wird, dass die bei Ein- und Auslagerung in den Zwischenspeicher (50) erforderlichen Verfahrwege minimiert sind.

4. Verfahren nach einem der Ansprüche 1 bis 3, wobei bei der kontinuierlichen Bestimmung der optimierten Bearbeitungsreihenfolge und optimierten Rohglasplatten-Zuschnittmuster in Verfahrensschritt (d) mehrere unterschiedliche Glassorten berücksichtigt werden, die in frei wählbarer Abfolge bearbeitbar sind.

5. Verfahren nach einem der Ansprüche 1 bis 4, ferner umfassend die Erfassung manuell ein- oder ausgeschleuster Einzelglasscheiben.

6. Verfahren nach einem der Ansprüche 1 bis 5, ferner umfassend die Berücksichtigung besonderer Eilaufträge.

7. Verfahren nach einem der Ansprüche 1 bis 6, umfassend die Erfassung einer Beschädigung einer Rohglasplatte (21) oder eines Glaszuschnitts (25) während der Bearbeitung und Berücksichtigung bei der kontinuierlichen Bestimmung der optimierten Bearbeitungsreihenfolge und optimierten Rohglasplatten-Zuschnittmuster in Verfahrensschritt (d).

8. Verfahren nach einem der Ansprüche 1 bis 7, wobei bei einer Unterbrechung der Verarbeitung die momentanen Erfassungs- und Bestimmungsresultate der Verfahrensschritte (a) bis (d) automatisch abgespeichert werden.

9. Verfahren nach einem der Ansprüche 1 bis 8, wobei die Bestimmung der optimierten Bearbeitungsreihenfolge und optimierter Rohglasplatten-Zuschnittmuster in Verfahrensschritt (d) zugunsten einer höheren Produktivität in Form von pro Zeiteinheit bearbeiteten Glaszuschnitten (25) oder zugunsten eines minimierten Materialverschnitts einstellbar ist.

10. Verfahren nach einem der Ansprüche 1 bis 9, wobei der Zwischenspeicher (50) als Pufferspeicher zur Weiterverarbeitung der Glaszuschnitte (25) dient.

11. Verfahren nach einem der Ansprüche 1 bis 9, wobei der Zwischenspeicher (50) als Pufferspeicher für den Versand der Glaszuschnitte (25) dient und die Glaszuschnitte (25) in einer für den Versand vorgesehenen Reihenfolge in den Fächern (55) des Pufferspeichers abgelegt werden.

12. Verfahren nach Anspruch 11, wobei die Versandreihenfolge der Glaszuschnitte (25) durch einen belieferten Weiterverarbeitungsbetrieb vorgegeben wird.

13. Verfahren nach einem der Ansprüche 1 bis 12, wobei der aktuelle Bearbeitungszustand des Verfahrens einschließlich etwaiger Beschädigungen von Rohglasplatten (21) oder Glaszuschnitten (25) auf einer Anzeigeeinrichtung (75) angezeigt wird.

14. Verfahren nach einem der Ansprüche 1 bis 13, wobei der Verfahrensschritt (f) des Anritzen der Rohglasplatten (21) und anschließendes Brechen auf einem Brechtisch (40) umfasst.

15. Verfahren nach einem der Ansprüche 1 bis 13, wobei der Verfahrensschritt (f) des Schneiden der Rohglasplatten (21) mittels Laser oder Wasserstrahlwerkzeugen umfasst.

16. Vorrichtung zum Zuschneiden von Rohglasplatten (21) in eine Vielzahl von Glaszuschnitten (25), aufweisend:
- ein Rohglasplattenlager (20) zur Lagerung ungeschnittener und teilgeschnittener Rohglasplatten (21),
- eine Erfassungseinrichtung zur Erfassung des Vorrats an ungeschnittenen und teilgeschnittenen Rohglasplatten (21) und zur kontinuierlichen Erfassung des Eingangs neuer Zuschnittaufträge und von zur Bearbeitung freigegebenen Zuschnittaufträgen,
- eine Berechnungseinrichtung (70) zur kontinuierlichen Bestimmung einer optimierten Bearbeitungsreihenfolge und optimierter Rohglasplatten-Zuschnittmuster durch eine Realtime-Optimierung aller durch die Erfassungseinrichtung erfassten aktuellen Zuschnittaufträge umfassend die erfassten neuen Zuschnittaufträge und die erfassten zur Bearbeitung freigegebenen Zuschnittaufträge auf den durch die Erfassungseinrichtung erfassten Vorrat an ungeschnittenen und teilgeschnittenen Rohglasplatten (21),
- eine Bearbeitungseinrichtung (30, 40) zum Zuschneiden der Rohglasplatten (21) in die Glaszuschnitte (25),
- eine Steuereinrichtung (70) zur Steuerung der Bearbeitungseinrichtung (30, 40) entsprechend der bestimmten optimierten Bearbeitungsreihenfolge und optimierten Zuschnittmuster, und
- ein Zwischenlager (50) mit mehreren Fächern (55) zur durch eine Berechnungseinrichtung (70) in Abhängigkeit der optimierten Bearbeitungsreihenfolge gesteuerten dynamischen Einlagerung und Pufferung der bearbeiteten Glaszuschnitte (25), wobei die Fächer (55) des Zwischenspeichers (50) ausgebildet sind, gleichzeitig mit Glaszuschnitten (25) befüllt und entleert zu werden.

17. Vorrichtung nach Anspruch 16, wobei die Berechnungseinrichtung (70) ausgebildet ist, die optimierte Bearbeitungsreihenfolge unter Berücksichtigung der für die Weiterverarbeitung der Glaszuschnitte (25) benötigten Weiterverarbeitungsreihenfolge zu bestimmen.

18. Vorrichtung nach Anspruch 16 oder 17, aufweisend eine Eingabeeinrichtung (75) zur Eingabe manuell ein- oder ausgeschleuster Einzelglasscheiben.

19. Vorrichtung nach Anspruch 18, wobei die Eingabeeinrichtung (75) zur Bestimmung besonderer Eilaufträge ausgebildet ist.

20. Vorrichtung nach einem der Ansprüche 16 bis 19, aufweisend eine Überwachungseinrichtung zur Erfassung der Beschädigung einer Rohglasplatte (21) oder eines Glaszuschnitts (25) während der Bearbeitung.

21. Vorrichtung nach Anspruch 20, wobei die Berechnungseinrichtung (70) ausgebildet ist, eine von der Überwachungseinrichtung erfasste Beschädigung einer Rohglasplatte (21) oder eines Glaszuschnitts (25) bei der kontinuierlichen Bestimmung der optimierten Bearbeitungsreihenfolge und optimierten Rohglasplatten-Zuschnittmuster zu berücksichtigen.

22. Vorrichtung nach einem der Ansprüche 16 bis 21, wobei der Zwischenspeicher (50) als Fächerwagen mit einer Vielzahl von Fächern (55) zur vertikalen Lagerung der Glaszuschnitte (25) ausgebildet ist.

23. Vorrichtung nach einem der Ansprüche 16 bis 22, wobei der Zwischenspeicher (50) zwei zueinander verfahrbaren Magazine mit Fächern (55) zur vertikalen Lagerung der Glaszuschnitte (25) aufweist.

24. Vorrichtung nach einem der Ansprüche 16 bis 22, wobei der Zwischenspeicher (50) ein ortsfestes Magazin mit Fächern (55) zur vertikalen Lagerung der Glaszuschnitte (25) und unabhängig voneinander verfahrbare Belade- und Entnahmeeinrichtungen (51, 52) aufweist.

25. Vorrichtung nach einem der Ansprüche 16 bis 24, aufweisend eine Anzeigeeinrichtung (75) zur Anzeige des aktuellen Bearbeitungszustandes der Glaszuschnitte (25).

26. Vorrichtung nach einem der Ansprüche 16 bis 25, aufweisend eine Einrichtung (30) zum Anritzen der Rohglasplatten und einen Brechtisch (40) zum anschließenden Brechen der geritzten Rohglasplatten (21).

27. Vorrichtung nach einem der Ansprüche 16 bis 25, aufweisend eine Schneideinrichtung zum Schneiden der Rohglasplatten mittels Laser oder Wasserstrahl.

## Claims

1. A process for cutting raw glass sheets (21) into a plurality of glass blanks (25), having the steps:
(a) detecting the supply of uncut and partially cut raw glass sheets (21),
(b) continuously detecting the entry of new cutting orders,
(c) continuously detecting cutting orders released for processing,
(d) continuously determining an optimised processing sequence and optimised raw glass sheet cutting patterns by real-time optimisation of all current cutting orders, including the new cutting orders detected in step (b) and the cutting orders released for processing detected in step (c), for the supply of uncut and partially cut raw glass sheets (21) detected in step (a),
(e) processing the cutting orders according to the determined optimised processing sequence and optimised cutting patterns,
(f) storing and buffering the glass blanks (25) in dynamically associated compartments (55) of a temporary storage facility (50) in a manner controlled by a calculating device (70) depending on the optimised processing sequence identified in step (d), and
(g) removing the glass blanks (25) in sequence from the temporary storage facility (50), whereby the compartments (55) of the temporary storage facility (50) are filled with, and emptied of, glass blanks (25) simultaneously.

2. A process according to Claim 1, wherein the optimised processing sequence is determined on the basis of a further processing sequence required for subsequent further processing of the glass blanks (25).

3. A process according to Claim 1 or 2, wherein the respective compartment of the temporary storage facility (50) is selected to minimise the necessary travelling distances during storage and removal in the temporary storage facility (50).

4. A process according to one of Claims 1 to 3, wherein a plurality of different glass types, which may be processed in a freely selectable sequence, are taken into account in the continuous determination of the optimised processing sequence and optimised raw glass sheet cutting patterns in process step (d).

5. A process according to one of Claims 1 to 4, further comprising the detection of individual glass sheets which are introduced or removed manually.

6. A process according to one of Claims 1 to 5, further comprising the taking into account of special express orders.

7. A process according to one of Claims 1 to 6, comprising detecting damage to a raw glass sheet (21) or a glass blank (25) during processing and taking this into account in the continuous determination of the optimised processing sequence and optimised raw glass sheet cutting patterns in process step (d).

8. A process according to one of Claims 1 to 7, wherein, in the event of an interruption in processing, the instantaneous detection and determination results of process steps (a) to (d) are stored automatically.

9. A process according to one of Claims 1 to 8, wherein the determination of the optimised processing sequence and optimised raw glass sheet cutting patterns in process step (d) may be adjusted in favour of higher productivity in the form of glass blanks (25) processed per unit of time or in favour of minimised material waste.

10. A process according to one of Claims 1 to 9, wherein the temporary storage facility (50) serves as a buffer store for further processing of the glass blanks (25).

11. A process according to one of Claims 1 to 9, wherein the temporary storage facility (50) serves as a buffer store for the distribution of the glass blanks (25) and the glass blanks (25) are deposited in the compartments (55) of the buffer store in a sequence intended for distribution.

12. A process according to Claim 11, wherein the distribution sequence of the glass blanks (25) is predetermined by a further-processing plant which is being supplied.

13. A process according to one of Claims 1 to 12, wherein the current status of the process including any damage to raw glass sheets (21) or glass blanks (25) is displayed on a display device (75).

14. A process according to one of Claims 1 to 13, wherein the process step (f) comprises the scoring the raw glass sheets (21) and subsequent breaking on a breaking table (40).

15. A process according to one of Claims 1 to 13, wherein the process step (f) comprises cutting the raw glass sheets (21) by means of laser or water jet tools.

16. A device for cutting raw glass sheets (21) into a plurality of glass blanks (25), having:
- a raw glass sheet store (20) for storing uncut and partially cut raw glass sheets (21),
- a detection device for detecting the supply of uncut and partially cut raw glass sheets (21) and for continuously detecting the entry of new cutting orders and cutting orders released for processing,
- a calculating device (70) for continuously determining an optimised processing sequence and optimised raw glass sheet cutting patterns by real-time optimisation of all current cutting orders detected by the detection device, including the detected new cutting orders and the detected cutting orders released for processing, for the supply of uncut and partially cut raw glass sheets (21) detected by the detection device,
- a processing device (30, 40) for cutting the raw glass sheets (21) into the glass blanks (25),
- a control device (70) for controlling the processing device (30, 40) according to the determined optimised processing sequence and optimised cutting patterns, and
- a temporary storage facility (50) with a plurality of compartments (55) for the dynamic storage and buffering of the processed glass blanks (25) in a manner controlled by a calculating device (70) depending on the optimised processing sequence, wherein the compartments (55) of the temporary storage facility (50) are designed to be filled with, and emptied of, glass blanks (25) simultaneously.

17. A device according to Claim 16, wherein the calculating device (70) is designed to determine the optimised processing sequence, taking into account the further processing sequence required for further processing of the glass blanks (25).

18. A device according to Claim 16 or 17, having an entry device (75) for entering individual glass sheets which are introduced or removed manually.

19. A device according to Claim 18, wherein the entry device (75) is designed to determine special express orders.

20. A device according to one of Claims 16 to 19, having a monitoring device for detecting damage to a raw glass sheet (21) or a glass blank (25) during processing.

21. A device according to Claim 20, wherein the calculating device (70) is designed to take into account any damage to a raw glass sheet (21) or a glass blank (25) detected by the monitoring device during the continuous determination of the optimised processing sequence and optimised raw glass sheet cutting pattern.

22. A device according to one of Claims 16 to 21, wherein the temporary storage facility (50) is designed as rack trolleys with a plurality of compartments (55) for vertical storage of the glass blanks (25).

23. A device according to one of Claims 16 to 22, wherein the temporary storage facility (50) has two mutually displaceable stores with compartments (55) for vertical storage of the glass blanks (25).

24. A device according to one of Claims 16 to 22, wherein the temporary storage facility (50) has a fixed store with compartments (55) for vertical storage of the glass blanks (25) and mutually independently displaceable loading and removal devices (51, 52).

25. A device according to one of Claims 16 to 24, having a display device (75) for displaying the current processing status of the glass blanks (25).

26. A device according to one of Claims 16 to 25, having a device (30) for scoring the raw glass sheets and a breaking table (40) for subsequently breaking the scored raw glass sheets (21).

27. A device according to one of Claims 16 to 25, having a cutting device for cutting the raw glass sheets by means of laser or water jet.

## Revendications

1. Procédé de coupe de feuilles de verre brut (21) en une pluralité de découpes de verre (25), comprenant les étapes suivantes :
(a) saisie du stock de feuilles de verre brut non coupées et en partie coupées (21),
(b) saisie en continu de l'arrivée de nouvelles commandes de découpe,
(c) saisie en continu des commandes de découpe validées pour le façonnage,
(d) détermination en continu d'une séquence de façonnage optimisée et de schémas de découpe des feuilles de verre brut optimisés par une optimisation en temps réel de toutes les commandes de découpe en cours, comprenant les nouvelles commandes de découpe saisies à l'étape (b) et les commandes de découpe validées pour le façonnage saisies à l'étape (c), en fonction du stock de feuilles de verre brut (21) non coupées et en partie coupées saisi à l'étape (a),
(e) traitement des commandes de découpe suivant la séquence de façonnage optimisée et les schémas de découpe optimisés ainsi déterminés,
(f) en fonction de la séquence de façonnage optimisée déterminée à l'étape (d), entreposage et calage pilotés par un dispositif de calcul (70) des découpes de verre (25) dans des casiers affectés dynamiquement (55) d'un stockage intermédiaire (50), et
(g) sortie séquencée des découpes de verre (25) du stockage intermédiaire (50), les casiers (55) du stockage intermédiaire (50) étant en même temps remplis et vidés de découpes de verre (25).

2. Procédé selon la revendication 1, dans lequel la séquence de façonnage optimisée est déterminée d'après une séquence de finition requise pour une finition des découpes de verre (25) effectuée ensuite.

3. Procédé selon la revendication 1 ou la revendication 2, dans lequel le casier concerné du stockage intermédiaire (50) est choisi de manière à minimiser les déplacements nécessaires pour la mise en casiers et le retrait du stockage intermédiaire (50).

4. Procédé selon l'une des revendications 1 à 3, dans lequel la détermination en continu de la séquence de façonnage optimisée et des schémas de découpe des feuilles de verre brut optimisés à l'étape (d) tient compte de plusieurs types de verres différents qui peuvent être façonnés dans un ordre choisi librement.

5. Procédé selon l'une des revendications 1 à 4, comprenant en outre la saisie de plaques de verre individuelles entrées ou sorties manuellement.

6. Procédé selon l'une des revendications 1 à 5, comprenant en outre la prise en compte de commandes urgentes particulières.

7. Procédé selon l'une des revendications 1 à 6, comprenant la saisie d'une détérioration d'une feuille de verre brut (21) ou d'une découpe de verre (25) en cours de façonnage et sa prise en compte dans la détermination en continu de la séquence de façonnage optimisée et des schémas de découpe des feuilles de verre brut optimisés dans l'étape de procédé (d).

8. Procédé selon l'une des revendications 1 à 7, dans lequel les résultats temporaires de la saisie et de la détermination dans les étapes de procédé (a) à (d) sont automatiquement sauvegardés en cas d'interruption du façonnage.

9. Procédé selon l'une des revendications 1 à 8, dans lequel la détermination de la séquence de façonnage optimisée et des schémas de découpe des feuilles de verre brut optimisés dans l'étape de procédé (d) peut être ajustée dans le sens d'une plus grande productivité en termes de nombre de découpes de verre (25) réalisées par unité de temps ou dans le sens d'une perte de matière minimisée.

10. Procédé selon l'une des revendications 1 à 9, dans lequel le stockage intermédiaire (50) sert de stockage tampon pour la finition des découpes de verre (25).

11. Procédé selon l'une des revendications 1 à 9, dans lequel le stockage intermédiaire (50) sert de stockage tampon pour l'expédition des découpes de verre (25) et les découpes de verre (25) sont déposées dans les casiers (55) du stockage tampon selon une séquence prévue pour l'expédition.

12. Procédé selon la revendication 11, dans lequel la séquence d'expédition des découpes de verre (25) est prédéfinie par une entreprise de finition destinataire de la livraison.

13. Procédé selon l'une des revendications 1 à 12, dans lequel l'état de façonnage en cours du procédé, y compris les éventuelles détériorations de feuilles de verre brut (21) ou de découpes de verre (25), est affiché sur un dispositif d'affichage (75).

14. Procédé selon l'une des revendications 1 à 13, dans lequel l'étape de procédé (f) comprend le rainurage des feuilles de verre brut (21) suivi de leur rupture sur une table de rupture (40).

15. Procédé selon l'une des revendications 1 à 13, dans lequel l'étape de procédé (f) comprend la découpe des feuilles de verre brut (21) au moyen d'un laser ou d'outils de découpage au jet d'eau.

16. Dispositif pour couper des feuilles de verre brut (21) en une pluralité de découpes de verre (25), comprenant :
- un magasin de feuilles de verre brut (20) pour stocker des feuilles de verre brut non coupées et en partie coupées (21),
- un dispositif de saisie pour saisir le stock de feuilles de verre brut non coupées et en partie coupées (21) et pour saisir en continu l'arrivée de nouvelles commandes de découpe et de commandes de découpe validées pour le façonnage,
- un dispositif de calcul (70) pour déterminer en continu une séquence de façonnage optimisée et des schémas de découpe des feuilles de verre brut optimisés par une optimisation en temps réel de toutes les commandes de découpe en cours saisies au moyen du dispositif de saisie, comprenant les nouvelles commandes de découpe saisies et les commandes de découpe validées pour le façonnage saisies, en fonction du stock de feuilles de verre brut non coupées et en partie coupées saisi au moyen du dispositif de saisie,
- un dispositif de façonnage (30, 40) pour couper les feuilles de verre brut (21) en découpes de verre (25),
- un dispositif de commande (70) pour piloter le dispositif de façonnage (30, 40) conformément à la séquence de façonnage optimisée et aux schémas de découpe optimisés déterminés, et
- un magasin intermédiaire (50) à plusieurs casiers (55) pour entreposer et caler de manière dynamique, piloté par un dispositif de calcul (70), les découpes de verre (25) façonnées en fonction de la séquence de façonnage optimisée, les casiers (55) dudit stockage intermédiaire (50) étant configurés pour être en même temps remplis et vidés de découpes de verre (25).

17. Dispositif selon la revendication 16, dans lequel le dispositif de calcul (70) est configuré pour déterminer la séquence de façonnage optimisée en tenant compte de la séquence de finition requise pour la finition des découpes de verre (25).

18. Dispositif selon la revendication 16 ou la revendication 17, comprenant un dispositif de saisie (75) pour la saisie de plaques de verre introduites ou sorties manuellement.

19. Dispositif selon la revendication 18, dans lequel le dispositif de saisie (75) est configuré pour déterminer des commandes urgentes particulières.

20. Dispositif selon l'une des revendications 16 à 19, comprenant un dispositif de surveillance pour détecter la détérioration d'une feuille de verre brut (21) ou d'une découpe de verre (25) en cours de façonnage.

21. Dispositif selon la revendication 20, dans lequel le dispositif de calcul (70) est configuré pour tenir compte d'une détérioration d'une feuille de verre brut (21) ou d'une découpe de verre (25) détectée par le dispositif de surveillance dans la détermination en continu de la séquence de façonnage optimisée et des schémas de découpe des feuilles de verre brut optimisés.

22. Dispositif selon l'une des revendications 16 à 21, dans lequel le stockage intermédiaire (50) est réalisé sous la forme de chariots à casiers comprenant une pluralité de casiers (55) pour le stockage vertical des découpes de verre (25).

23. Dispositif selon l'une des revendications 16 à 22, dans lequel le stockage intermédiaire (50) présente deux magasins mobiles l'un par rapport à l'autre avec des casiers (55) pour le stockage vertical des découpes de verre (25).

24. Dispositif selon l'une des revendications 16 à 22, dans lequel le stockage intermédiaire (50) présente un magasin fixe avec des casiers (55) pour le stockage vertical des découpes de verre (25) et des dispositifs de chargement et prélèvement mobiles indépendamment les uns des autres (51, 52).

25. Dispositif selon l'une des revendications 16 à 24, comprenant un dispositif d'affichage (75) pour indiquer l'état actuel du façonnage des découpes de verre (25).

26. Dispositif selon l'une des revendications 16 à 25, comprenant un dispositif (30) de rainurage des feuilles de verre brut et une table de rupture (40) pour rompre ensuite les feuilles de verre brut (21) rainurées.

27. Dispositif selon l'une des revendications 16 à 25, comprenant un dispositif de coupe pour couper les feuilles de verre brut au moyen d'un laser ou d'un jet d'eau.
